# EUROPÄISCHE PATENTANMELDUNG

(11) **EP 2 324 931 A2**
(43) Veröffentlichungstag der Anmeldung: **25.05.2011**
(21) Anmeldenummer: 10191217.8
(22) Anmeldetag: 15.11.2010
(51) Int. Cl.: B05C 5/02, B05C 11/10, B29B 13/02

(54) **Vorrichtung zum Bereitstellen von schmelzflüssigem Kleber**

(30) Priorität: 18.11.2009 DE 202009016024 U
(71) Anmelder: HOLZ-HER GmbH, 72622 Nürtingen (DE)
(72) Erfinder: Henzler, Roland, 72622, Nürtingen-Raidwangen (DE); Hummel, Rainer, 72760, Reutlingen (DE); Podolski, Werner, 72285, Pfalzgrafenweiler (DE)
(74) Vertreter: Hoeger, Stellrecht & Partner Patentanwälte

(57) **Zusammenfassung**

Die Erfindung betrifft eine Vorrichtung (10) zum Bereitstellen von schmelzflüssigem Kleber für eine Kleberauftragseinheit (18) einer Kantenanleimmaschine mit einem ersten Schmelzaggregat (20), das eine erste beheizbare Schmelzkammer (26) zum Schmelzen eines ersten Klebers aufweist sowie eine erste Fördereinrichtung (34) zum Zuführen des geschmolzenen Klebers zur Kleberauftragseinheit (18). Um die Vorrichtung (10) derart weiterzubilden, dass innerhalb kurzer Zeit ein Wechsel des zum Einsatz kommenden Klebers erfolgen kann, wird vorgeschlagen, dass die Vorrichtung ein zweites Schmelzaggregat (22) aufweist mit einer zweiten beheizbaren Schmelzkammer zum Schmelzen eines zweiten Klebers und mit einer zweiten Fördereinrichtung zum Zuführen des geschmolzenen zweiten Klebers zur Kleberauftragseinheit (18) und dass die Vorrichtung (10) eine Ventileinheit (24) umfasst mit einem ersten Eingang (36), an den das erste Schmelzaggregat (20) angeschlossen ist, und einem zweiten Eingang (38), an den das zweite Schmelzaggregat (22) angeschlossen ist, wobei die beiden Eingänge (36,38) mit einem Ausgang (42) der Ventileinheit (24) in Strömungsverbindung stehen und die Strömungsverbindung zwischen dem ersten Eingang (36) und dem Ausgang (42) mittels eines Schließgliedes (50) wahlweise unterbrechbar und freigebbar ist.

## Beschreibung

Die Erfindung betrifft eine Vorrichtung zum Bereitstellen von schmelzflüssigem Kleber für eine Kleberauftragseinheit einer Kantenanleimmaschine, mit einem ersten Schmelzaggregat, das eine erste beheizbare Schmelzkammer zum Schmelzen eines ersten Klebers aufweist sowie eine erste Fördereinrichtung zum Zuführen des geschmolzenen Klebers zur Kleberauftragseinheit.

Derartige Vorrichtungen kommen bei Kantenanleimmaschinen zum Einsatz, wie sie beispielsweise in der EP 0 750 536 B1 beschrieben sind. Bei solchen Maschinen wird ein plattenförmiges Werkstück in einer Transportebene kontinuierlich bewegt und bandförmiges Kantenmaterial wird während der Bewegung des Werkstücks mit einer Schmalseite des Werkstücks verklebt. Anschließend kann das Werkstück zusammen mit dem Kantenmaterial einer Nachbearbeitung zugeführt werden. Beispielsweise können die in vertikaler Richtung oberen und unteren Randbereiche des Kantenmaterials gefräst werden, um einen kontinuierlichen Übergang zwischen der Ober- und der Unterseite des Werkstücks und dem Kantenmaterial zu erzielen.

Zum Verkleben des Kantenmaterials mit der Schmalseite des Werkstücks wird üblicherweise auf die Schmalseite ein schmelzflüssiger Kleber aufgetragen. Dieser wird von der eingangs genannten Vorrichtung bereitgestellt. Die Vorrichtung umfasst hierzu ein Schmelzaggregat mit einer beheizten Schmelzkammer. In der Schmelzkammer kann der üblicherweise in Form eines Granulats oder in Form einer Kleberpatrone bevorratete Kleber geschmolzen werden. Anschließend wird der Kleber dann mit Hilfe einer Fördereinrichtung einer Kleberauftragseinheit der Kantenanleimmaschine zugeführt. Die Fördereinrichtung kann beispielsweise ein Kolben-Zylinderaggregat umfassen, mit dessen Hilfe der geschmolzene Kleber zur Kleberauftragseinheit gedrückt wird. Die Kleberauftragseinheit kann beispielsweise in Form einer Applikationsrolle ausgebildet sein, auf die der schmelzflüssige Kleber aufgetragen wird und von der aus der Kleber dann auf die Schmalseite des Werkstücks appliziert wird. Der zum Einsatz kommende Kleber weist üblicherweise eine Färbung auf, die an die Farbgebung des zu verklebenden Kantenmaterials angepasst ist. Bei einem Wechsel des Kantenmaterials ist es daher häufig erforderlich, auch den zum Einsatz kommenden Kleber auszutauschen. Dies macht eine vollständige Reinigung des Schmelzaggregats erforderlich. Derartige Reinigungsmaßnahmen sind mit erheblichen Ausfallzeiten der Kantenanleimmaschine verbunden und sollten daher in möglichst kurzer Zeit durchgeführt werden können.

Üblicherweise kommen als Kleber Thermoplaste oder Duroplaste zum Einsatz. Thermoplaste können innerhalb eines vorgegebenen Temperaturbereichs reversibel aufgeschmolzen werden. Sie können also auch nach einer ersten Aushärtung weiter verarbeitet werden, indem sie wieder aufgeschmolzen werden. Ein derartiges Wiederaufschmelzen ist bei Duroplasten nur möglich, solange sie noch nicht ausgehärtet sind. Die Aushärtung erfolgt durch Kontakt mit dem Sauerstoff der Luft. Sie müssen daher sorgfältig gegenüber Luft abgeschirmt werden, so lange noch keine Aushärtung erfolgen soll.

Aufgabe der vorliegenden Erfindung ist es, eine gattungsgemäße Vorrichtung bereitzustellen, bei der innerhalb kurzer Zeit ein Wechsel des zum Einsatz kommenden Klebers erfolgen kann.

Diese Aufgabe wird bei einer Vorrichtung der gattungsgemäßen Art erfindungsgemäß dadurch gelöst, dass die Vorrichtung ein zweites Schmelzaggregat aufweist mit einer zweiten beheizbaren Schmelzkammer zum Schmelzen eines zweiten Klebers und mit einer zweiten Fördereinrichtung zum Zuführen des geschmolzenen zweiten Klebers zur Kleberauftragseinheit, und dass die Vorrichtung eine Ventileinheit umfasst mit einem ersten Eingang, an den das erste Schmelzaggregat angeschlossen ist, und einem zweiten Eingang, an den das zweite Schmelzaggregat angeschlossen ist, wobei die beiden Eingänge mit einem Ausgang der Ventileinheit in Strömungsverbindung stehen und die Strömungsverbindung zwischen dem ersten Eingang und dem Ausgang mittels eines Schließgliedes wahlweise unterbrechbar und freigebbar ist.

Die erfindungsgemäße Vorrichtung weist zusätzlich zum ersten Schmelzaggregat ein zweites Schmelzaggregat auf, mit dessen Hilfe ein zweiter Kleber bereitgestellt werden kann. Die Zuführung von schmelzflüssigem Kleber vom ersten Schmelzaggregat und vom zweiten Schmelzaggregat zur Kleberauftragseinheit der Kantenanleimmaschine erfolgt über eine Ventileinheit der Vorrichtung. Das erste Schmelzaggregat ist an den ersten Eingang der Ventileinheit und das zweite Schmelzaggregat ist an den zweiten Eingang der Ventileinheit angeschlossen. Die beiden Eingänge stehen über Strömungskanäle mit einem gemeinsamen Ausgang der Ventileinheit in Strömungsverbindung, von dem aus die schmelzflüssigen Kleber der Kleberauftragseinheit zugeführt werden können.

Erfindungsgemäß kann die Strömungsverbindung zwischen dem ersten Eingang der Ventileinheit und dem Ausgang wahlweise unterbrochen und freigegeben werden. Soll der erste Kleber zum Verkleben von Kantenmaterial mit der Schmalseite des Werkstücks zum Einsatz kommen, so kann die Strömungsverbindung zwischen dem ersten Eingang und dem Ausgang der Ventileinheit freigegeben werden. Der erste schmelzflüssige Kleber kann dann mittels der ersten Fördereinrichtung von der ersten Schmelzkammer über die Ventileinheit zur Kleberauftragseinheit gefördert werden. Als erster Kleber kommt vorzugsweise ein Thermoplast zum Einsatz. Dies hat den Vorteil, dass nach Beendigung des Auftragsvorgangs das erste Schmelzaggregat außer Betrieb gesetzt werden kann, so dass die erste Schmelzkammer und auch die vom ersten schmelzflüssigen Kleber erwärmte Ventileinheit abkühlen. Der erste schmelzflüssige Kleber, der sich noch in der Ventileinheit befindet, erstarrt dadurch und verhindert das Eindringen von Luft in die Ventileinheit. Insbesondere kann keine Luft vom Ausgang der Ventileinheit zum zweiten Eingang der Ventileinheit gelangen, an den das zweite Schmelzaggregat angeschlossen ist.

Soll zu einem späteren Zeitpunkt wieder Kleber bereitgestellt werden, so kann das erste Schmelzaggregat wieder in Betrieb gesetzt werden, wobei die erste Schmelzkammer und die Ventileinheit erwärmt werden. Der erste Kleber wird wieder geschmolzen und kann anschließend zum Verkleben von Kantenmaterial zum Einsatz kommen.

Soll statt des ersten Klebers der zweite Kleber zum Einsatz kommen, so kann die Strömungsverbindung zwischen dem ersten Eingang und dem Ausgang der Ventileinheit unterbrochen werden. Anschließend kann aus der zweiten Schmelzkammer schmelzflüssiger zweiter Kleber über die Fördereinrichtung des zweiten Schmelzaggregats zur Ventileinheit befördert werden, wo der zweite schmelzflüssige Kleber vom zweiten Eingang der Ventileinheit über den Ausgang der Ventileinheit zur Kleberauftragseinheit gelangt. Als zweiter Kleber kann insbesondere ein an Luft irreversibel aushärtender Duroplast zum Einsatz kommen. Erst am Ausgang der Kleberauftragseinheit, beispielsweise einer Applikationswalze oder auch einer Kleberauftragsdüse, gelangt der zweite schmelzflüssige Kleber mit Luft in Kontakt, so dass der Aushärtungsprozess in Gang gesetzt wird.

Soll die Bereitstellung des zweiten schmelzflüssigen Klebers beendet werden, so kann hierzu die Strömungsverbindung zwischen dem ersten Eingang und dem Ausgang der Ventileinheit wieder frei gegeben und schmelzflüssiger Kleber aus der ersten Schmelzkammer kann zur Kleberauftragseinheit befördert werden. Anschließend können beide Schmelzaggregate ausgeschaltet werden. Innerhalb der Ventileinheit befindet sich dann der thermoplastische erste Kleber, der durch das Erkalten der Ventileinheit erstarrt und dadurch das Eindringen von Luft verhindert, so dass sichergestellt ist, dass der zweite Kleber nicht mit Luft in Kontakt gelangt.

Alternativ kann statt des ersten schmelzflüssigen Klebers nach einer Applikation des zweiten schmelzflüssigen Klebers auch ein Spülmittel über den ersten Eingang in die Ventileinheit eingefüllt werden. Dies ermöglicht es, die Ventileinheit zu spülen. Nach erfolgtem Spülprozess ist die Ventileinheit mit Spülmittel gefüllt, das ebenfalls einen Lufteintritt in die Ventileinheit und damit einen Kontakt von Luft mit dem zweiten schmelzflüssigen Kleber verhindert.

Durch die Bereitstellung von zwei Schmelzaggregaten kann somit innerhalb kurzer Zeit ein Wechsel des zum Einsatz kommen Klebers durchgeführt werden. Beispielsweise können Kleber unterschiedlicher Färbung bereitgestellt werden, so dass innerhalb kurzer Zeit ein Farbwechsel vorgenommen werden kann.

Die Bereitstellung des zweiten Schmelzaggregats ist insbesondere dann von Vorteil, wenn die zweite Schmelzkammer ein verhältnismäßig großes Volumen aufweist, beispielsweise ein Volumen von mindestens zwei Litern. Dies erlaubt es nämlich, den zweiten Kleber in größeren Packungseinheiten zu beschaffen, beispielsweise in Form von Kleberpatronen mit einem Volumen von 2 Litern. Diese verhältnismäßig großen Kleberpatronen können in die zweite Schmelzkammer eingesetzt werden. Bei Einsatz des zweiten Schmelzaggregats muss nicht unbedingt der gesamte zweite Klebervorrat restlos verbraucht werden, vielmehr kann der Kleberauftragsvorgang jederzeit abgebrochen werden. Mittels des erfindungsgemäß zur Verfügung stehenden ersten Schmelzaggregats können die Ventileinheit und die Kleberauftragseinheit auf einfache Weise mit Spülmittel oder auch mit dem ersten schmelzflüssigen Kleber gespült werden.
Selbstverständlich ist es nicht zwingend erforderlich, die Ventileinheit und die Kleberauftragseinheit ausschließlich mit über das erste Schmelzaggregat der Ventileinheit zugeführtem Spülmittel oder mit schmelzflüssigem ersten Kleber zu spülen. Es kann natürlich auch nach Entleeren der zweiten Schmelzkammer in die zweite Schmelzkammer Spülmittel eingefüllt und mit diesem die Ventileinheit und die Kleberauftragseinheit gespült werden.

Die beiden Schmelzaggregate ermöglichen es, unabhängig voneinander jeweils einen schmelzflüssigen Kleber bereitzustellen. Die jeweiligen Schmelzkammern können unabhängig voneinander aufgeheizt werden.

Es kann vorgesehen sein, dass in die erste Schmelzkammer eine aufschmelzbare Kleberpatrone einsetzbar ist. Dies ermöglicht es, den ersten Kleber in Form von Kleberpatronen zu bevorraten, die bei Bedarf in die erste Schmelzkammer eingesetzt werden. Die Kleberpatronen weisen bevorzugt ein Volumen von maximal 1 Liter auf, insbesondere können sie ein Volumen von weniger als 0,5 Liter umfassen. Dies ermöglicht eine besonders bedarfsgerechte Anpassung des in der ersten Schmelzkammer zu schmelzenden Klebers an den Verbrauch der Kleberauftragseinheit.

Bei einer vorteilhaften Ausführungsform der erfindungsgemäßen Vorrichtung weist das erste Schmelzaggregat einen Vorratsbehälter auf, der über eine Zufuhröffnung mit der ersten Schmelzkammer verbunden ist, wobei in den Vorratsbehälter ein aufschmelzbares Klebergranulat einfüllbar ist. Eine derartige Ausgestaltung ist im Hinblick darauf von Vorteil, dass häufig die zum Einsatz kommenden Kleber in Form eines Granulats bevorratet werden. Das Klebergranulat kann in den Vorratsbehälter des Schmelzaggregats eingefüllt werden und kann über die Zufuhröffnung in die erste Schmelzkammer gelangen, in der das Granulat geschmolzen wird.

Von Vorteil ist es, wenn die zweite Schmelzkammer über eine beheizbare Verbindungsleitung mit dem zweiten Eingang der Ventileinheit verbunden ist. Durch den Einsatz der beheizbaren Verbindungsleitung wird sichergestellt, dass der in der zweiten Schmelzkammer geschmolzene Kleber im Bereich der Verbindungsleitung keine Abkühlung erfährt. Eine Abkühlung des Klebers wäre mit einer Änderung von dessen Viskosität verbunden. Durch die Bereitstellung der beheizbaren Verbindungsleitung lässt sich daher auf konstruktiv einfache Weise eine gleich bleibende Klebstoffviskosität sicherstellen.

Es kann vorgesehen sein, dass die Ventileinheit zwei Schließglieder aufweist, wobei mittels des ersten Schließgliedes die Strömungsverbindung zwischen dem ersten Eingang und dem Ausgang wahlweise freigebbar und unterbrechbar ist und mittels des zweiten Schließglieds die Strömungsverbindung zwischen dem zweiten Eingang und Ausgang wahlweise unterbrechbar und freigebbar ist.

Bei einer besonders bevorzugten Ausgestaltung der erfindungsgemäßen Vorrichtung ist die Strömungsverbindung zwischen dem ersten Eingang und dem Ausgang der Ventileinheit mittels des Schließgliedes wahlweise unterbrechbar und freigebbar unter Aufrechterhaltung der Strömungsverbindung zwischen dem zweiten Eingang und dem Ausgang. Bei einer derartigen Ausgestaltung kommt lediglich ein einziges Schließglied zum Einsatz. Mit Hilfe dieses Schließglieds kann lediglich die Strömungsverbindung zwischen dem ersten Eingang und dem Ausgang der Ventileinheit bei Bedarf unterbrochen werden, die Strömungsverbindung zwischen dem zweiten Eingang und dem Ausgang bleibt davon jedoch unbeeinflusst, diese zweite Strömungsverbindung kann nicht durch ein Schließglied unterbrochen werden. Wie bereits erläutert, eignet sich eine derartige Ausgestaltung der erfindungsgemäßen Vorrichtung insbesondere bei Einsatz eines ersten Klebers in Form eines Thermoplasten und eines zweiten Klebers in Form eines an Luft aushärtenden Duroplasten. Kommt der an Luft aushärtende Duroplast zum Einsatz, so wird die Strömungsverbindung zwischen dem ersten Eingang und dem Ausgang unterbrochen und der schmelzflüssige Duroplast kann von der zweiten Schmelzkammer über den zweiten Eingang zum Ausgang der Ventileinheit und von diesem dann zur Kleberauftragseinheit gelangen. Soll der schmelzflüssige Duroplast nicht mehr zum Einsatz kommen, so kann die Ventileinheit über den ersten Eingang mit Spülmittel gespült werden. Hierzu wird die Strömungsverbindung zwischen dem ersten Eingang und dem Ausgang geöffnet. Alternativ kann von der ersten Schmelzkammer der schmelzflüssige Thermoplast über den ersten Eingang in die Ventileinheit eingefüllt werden. Anschließend kann dann die Ventileinheit abkühlen, wobei entweder das darin befindliche Spülmittel oder der darin befindliche Thermoplast einen Luftkontakt des am zweiten Eingang anliegenden Duroplasten verhindert.

Als Schließglied der Ventileinheit kann beispielsweise ein Ventilstößel zum Einsatz kommen, der zwischen einer Schließstellung und einer Freigabestellung hin und her verschiebbar gelagert ist.

Von besonderem Vorteil ist es, wenn das Schließglied in der Ventileinheit schwenkbar gelagert ist.

Bevorzugt ist das Schließglied als Schwenkbolzen ausgebildet, der eine Durchgangsbohrung aufweist und zwischen einer Freigabestellung, in der die Durchgangsbohrung fluchtend zu einem Strömungskanal ausgerichtet ist, und einer Sperrstellung, in der die Durchgangsbohrung quer zum Strömungskanal ausgerichtet ist, hin und her schwenkbar ist. Soll die Strömungsverbindung zwischen dem ersten Eingang und dem Ausgang der Ventileinheit freigegeben werden, so wird der Schwenkbolzen in seine Freigabestellung verschwenkt, in der die Durchgangsbohrung fluchtend zum Strömungskanal ausgerichtet ist, so dass schmelzflüssiger Kleber den Durchgangskanal durchströmen kann. Soll die Strömungsverbindung zwischen dem ersten Eingang und dem Ausgang unterbrochen werden, so wird der Schwenkbolzen in seine Sperrstellung verschwenkt, in der die Durchgangsbohrung quer zum Strömungskanal ausgerichtet ist, so dass der schmelzflüssige Kleber die Durchgangsbohrung nicht passieren kann.

Das Schließglied ist bevorzugt manuell, elektrisch, pneumatisch oder hydraulisch bewegbar.

Eine besonders einfache Handhabung der erfindungsgemäßen Vorrichtung wird bei einer vorteilhaften Ausführungsform dadurch erzielt, dass das zweite Schmelzaggregat an einem Gestell der Vorrichtung verschiebbar gelagert ist. Es kann zwischen einer Betriebsstellung, in der es günstigerweise unmittelbar neben dem ersten Schmelzaggregat angeordnet ist, und einer Außerbetriebsstellung, in der es auf einfache Weise gereinigt werden kann und einen größeren Abstand zum ersten Schmelzaggregat aufweist, hin und her verschoben werden.

Günstigerweise ist das zweite Schmelzaggregat auf Teleskopschienen gelagert.

Die Ventileinheit ist bevorzugt wärmeleitend mit der ersten Schmelzkammer verbunden, so dass sie von der ersten Schmelzkammer erwärmt werden kann.

Bei einer vorteilhaften Ausführungsform bildet die Ventileinheit einen Deckel oder Abschluss der ersten Schmelzkammer.

Die nachfolgende Beschreibung einer bevorzugten Ausführungsform der Erfindung dient im Zusammenhang mit der Zeichnung der näheren Erläuterung. Es zeigen:
- Figur 1:: eine schematische Darstellung einer erfindungsgemäßen Vorrichtung zum Bereitstellen von schmelzflüssigem Kleber für eine Kleberauftragseinheit einer Kantenanleimmaschine;
- Figur 2:: eine vereinfachte schematische Darstellung der Vorrichtung aus Figur 1;
- Figur 3:: eine Schnittansicht eines ersten Schmelzaggregats der Vorrichtung aus Figur 1 mit einer Ventileinheit, wobei ein Schließglied der Ventileinheit eine Sperrstellung einnimmt, und
- Figur 4:: eine Schnittansicht gemäß Figur 3, wobei das Schließglied der Ventileinheit seine Freigabestellung einnimmt.

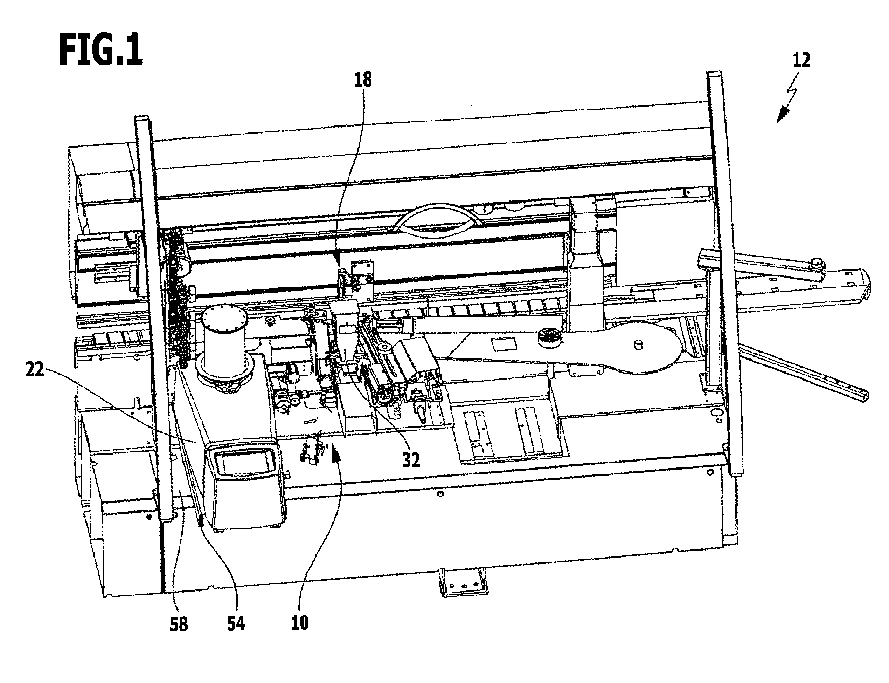

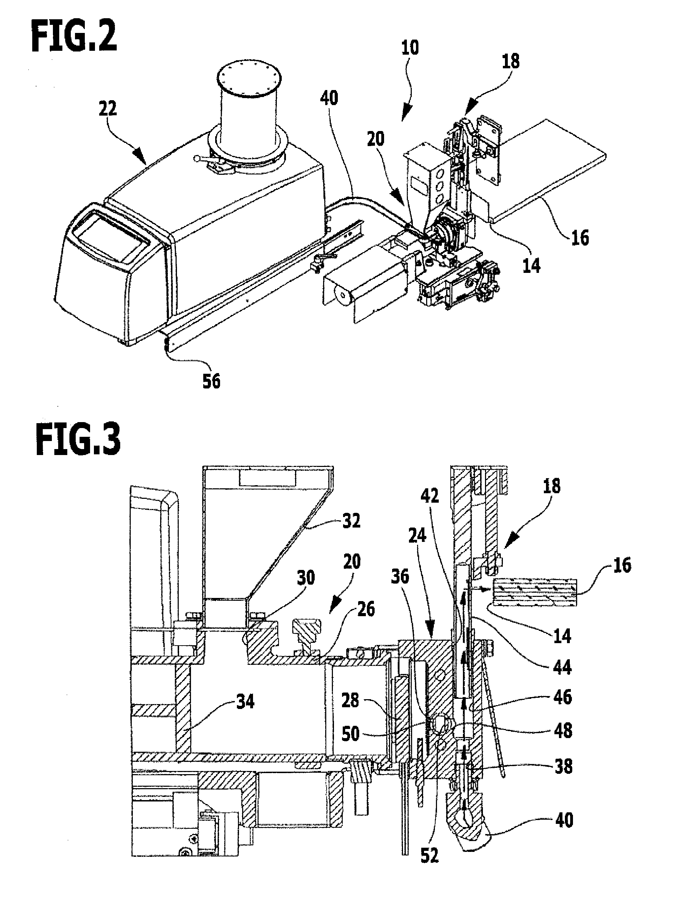

In Figur 1 ist schematisch eine insgesamt mit dem Bezugszeichen 10 belegte Vorrichtung zum Bereitstellen von schmelzflüssigem Kleber dargestellt. Die Vorrichtung 10 bildet eine Baugruppe einer Kantenanleimmaschine 12, mit der an eine Schmalseite 14 eines plattenförmigen, kontinuierlich bewegten Werkstücks 16 Kantenmaterial angeklebt werden kann. Auf die Schmalseite 14 wird hierzu ein schmelzflüssiger Kleber aufgetragen. Zu diesem Zweck umfasst die Kantenanleimmaschine 12 eine Kleberauftragseinheit 18, die in den Figuren 2, 3 und 4 schematisch dargestellt ist in Form einer Kleberauftragsdüse. Derartige Kleberauftragseinheiten sind dem Fachmann beispielsweise aus der DE 40 12 726 A1 bekannt.

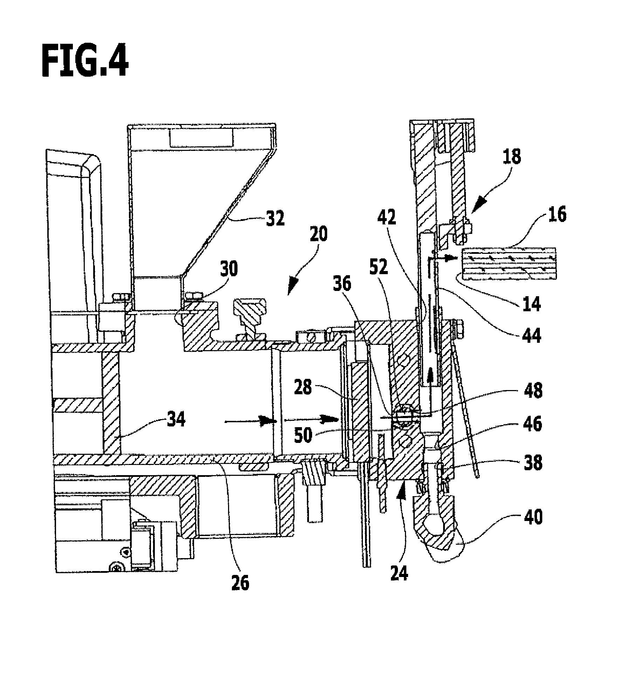

Der schmelzflüssige Kleber wird von der Vorrichtung 10 bereitgestellt. Sie umfasst ein erstes Schmelzaggregat 20 und ein zweites Schmelzaggregat 22 sowie eine Ventileinheit 24. Der Aufbau des ersten Schmelzaggregats 20 und der Ventileinheit 24 wird insbesondere aus den Figuren 3 und 4 deutlich. Das erste Schmelzaggregat 20 umfasst eine erste Schmelzkammer 26 mit einem beheizbaren Schmelzeinsatz 28. Über eine Zufuhröffnung 30 steht die erste Schmelzkammer 26 mit einem trichterförmigen Vorratsbehälter 32 in Verbindung. In den Vorratsbehälter kann ein erster Kleber in Form eines Klebergranulats eingefüllt werden, das über die Zufuhröffnung 30 in die erste Schmelzkammer 26 gelangt. Innerhalb der ersten Schmelzkammer 26 kann der Kleber mit Hilfe des Schmelzeinsatzes 28 geschmolzen werden.

Anstatt in die erste Schmelzkammer 26 Klebergranulat aus dem Vorratsbehälter 32 einzufüllen, kann in die erste Schmelzkammer 26 auch eine Kleberpatrone eingesetzt werden, die dann in der ersten Schmelzkammer 26 mit Hilfe des Schmelzeinsatzes 28 geschmolzen wird.

Der geschmolzene Kleber kann von einer ersten Fördereinrichtung in Form eines in der ersten Schmelzkammer 26 verschiebbar gelagerten Förderkolbens 34 in Richtung auf die an einer Stirnseite der Schmelzkammer 26 angeordnete Ventileinheit 24 gepresst werden. Die Ventileinheit 24 ist mit der ersten Schmelzkammer 26 wärmeleitend verbunden und deckt die erste Schmelzkammer stirnseitig ab. Sie umfasst einen ersten Eingang 36, der sich unmittelbar an die erste Schmelzkammer 26 anschließt, sowie einen zweiten Eingang 38, an den ein nachfolgend erläuterter beheizbarer Verbindungsschlauch 40 angeschlossen ist, sowie einen Ausgang 42, an den eine Zuführleitung 44 der Kleberauftragseinheit 18 angeschlossen ist. Der zweite Eingang 38 steht über einen Durchgangskanal 46 der Ventileinheit 24 permanent mit dem Ausgang 42 in Strömungsverbindung. In den Durchgangskanal 46 mündet ein vom ersten Eingang 36 ausgehender Eingangskanal 48, in dem ein Schließglied der Ventileinheit 24 in Form eines Schwenkbolzens 50 gelagert ist. Der Schwenkbolzen 50 weist eine Durchgangsbohrung 52 auf. Der Schwenkbolzen 50 ist zwischen einer in Figur 3 dargestellten Sperrstellung und einer in Figur 4 dargestellten Freigabestellung hin und her verschwenkbar. Die Durchgangsbohrung 50 ist in der Sperrstellung senkrecht zum Eingangskanal 48 ausgerichtet, wohingegen sie in der in Figur 4 dargestellten Freigabestellung fluchtend zum Eingangskanal 48 ausgerichtet ist.

Das zweite Schwenkaggregat 22 ist auf Teleskopschienen 54, 56 verschiebbar an einem Gestell 58 der Vorrichtung 10 gelagert. Das Gestell 58 bildet einen Teil des Maschinengestells der Kantenanleimmaschine 12 aus.

In entsprechender Weise wie das erste Schmelzaggregat weist auch das zweite Schmelzaggregat 22 eine beheizbare Schmelzkammer auf sowie eine Fördereinrichtung zum Zuführen des geschmolzenen Klebers zur Kleberauftragseinheit 18. Die zweite Schmelzkammer und die Fördereinrichtung des zweiten Schmelzaggregats 22 sind zur Erzielung einer besseren Übersicht in der Zeichnung nicht dargestellt. Derartige Schmelzkammern und Fördereinrichtungen sind dem Fachmann jedoch an sich bekannt und bedürfen daher vorliegend keiner detaillierten Erläuterung.

Das zweite Schmelzaggregat 22 steht über den beheizbaren Verbindungsschlauch 40 mit dem ersten Eingang 38 der Ventileinheit 24 in Strömungsverbindung, so dass in der zweiten Schmelzkammer des zweiten Schmelzaggregats 22 geschmolzener zweiter Kleber über den beheizbaren Verbindungsschlauch 40 zum zweiten Eingang 38 der Ventileinheit 24 gelangen kann. Der schmelzflüssige Kleber kann dann den Durchgangskanal 46 durchströmen und über den Ausgang 42 zur Zuführleitung 44 der Kleberauftragseinheit 18 gelangen.

Als zweiter Kleber kommt vorzugsweise ein an Luft aushärtender Duroplast zum Einsatz. Soll statt des vom zweiten Schmelzaggregat 22 bereitgestellten zweiten Klebers der vom ersten Schmelzaggregat 20 bereitgestellte erste Kleber zum Einsatz kommen, so muss hierzu lediglich der Schwenkbolzen 50 ausgehend von seiner in Figur 3 dargestellten Sperrstellung in seine in Figur 4 dargestellte Freigabestellung verschwenkt werden. Dadurch wird die Strömungsverbindung zwischen dem ersten Eingang 36 und dem Ausgang 42 der Ventileinheit 24 freigegeben, so dass in der ersten Schmelzkammer 26 geschmolzener erster Kleber vom ersten Eingang 36 über den Eingangskanal 48 und den Endabschnitt des Durchgangskanals 46 zum Ausgang 42 und über diesen zur Zuführleitung 44 der Kleberauftragseinheit 18 gelangen kann. Als erster schmelzflüssiger Kleber kommt vorzugsweise ein reversibel aufschmelzbarer Thermoplast zum Einsatz.

Statt des aufzuschmelzenden ersten Klebers kann in die erste Schmelzkammer 26 auch ein Spülmittel eingefüllt werden, mit dessen Hilfe nach Beendigung eines Kleberauftragsvorganges die Ventileinheit 24 und die Kleberauftragseinheit 18 gespült werden können. Der Schwenkbolzen 50 nimmt hierzu ebenfalls seine Freigabestellung ein, so dass das Spülmittel über den ersten Eingang 36 in die Ventileinheit 24 gelangen kann.

Mit Hilfe der Ventileinheit 24 und des zweiten Schmelzaggregats 22 zusätzlich zum ersten Schmelzaggregat 20 kann der Benutzer innerhalb kurzer Zeit den zum Einsatz kommenden Kleber wechseln. Beispielsweise können Kleber unterschiedlicher Färbung zum Einsatz kommen, so dass er bei einem Wechsel des auf die Schmalseite 14 aufzuklebenden Kantenmaterials auch den farblich passenden Kleber innerhalb kurzer Zeit wechseln kann.

Kommt als zweiter Kleber ein an Luft aushärtender Duroplast zum Einsatz, so kann ein Kontakt des Duroplasten mit Luft nach Beendigung des Auftragsvorgangs auf einfache Weise dadurch verhindert werden, dass in die Ventileinheit 24 über die erste Schmelzkammer 26 entweder Spülmittel oder ein geschmolzener Thermoplast als erster Kleber eingefüllt wird. Nach Abkühlen der Ventileinheit 24 und der ersten Schmelzkammer 26 sowie auch des beheizbaren Verbindungsschlauches 40 bildet das in der Ventileinheit 24 befindliche Spülmittel oder der in der Ventileinheit 24 befindliche Thermoplast einen Stopfen aus, der einen Luftzugang zum zweiten Eingang 38 und dem Verbindungsschlauch 40 verhindert. Damit ist aufgrund des fehlenden Luftkontakts sichergestellt, dass der im Verbindungsschlauch 40 und dem Eingangsabschnitt des Durchgangskanals 46 befindliche Duroplast zu einem späteren Zeitpunkt ohne Weiteres wieder aufgeschmolzen und mittels der Kleberauftragseinheit 18 auf die Schmalseite 14 des Werkstücks 16 aufgetragen werden kann.

## Patentansprüche

1. Vorrichtung zum Bereitstellen von schmelzflüssigem Kleber für eine Kleberauftragseinheit einer Kantenanleimmaschine mit einem ersten Schmelzaggregat, das eine erste beheizbare Schmelzkammer zum Schmelzen eines ersten Klebers aufweist sowie eine erste Fördereinrichtung zum Zuführen des geschmolzenen Klebers zur Kleberauftragseinheit, **dadurch gekennzeichnet, dass** die Vorrichtung (10) ein zweites Schmelzaggregat (22) aufweist mit einer zweiten beheizbaren Schmelzkammer zum Schmelzen eines zweiten Klebers und mit einer zweiten Fördereinrichtung zum Zuführen des geschmolzenen zweiten Klebers zur Kleberauftragseinheit (18) und dass die Vorrichtung (10) eine Ventileinheit (24) umfasst mit einem ersten Eingang (36), an den das erste Schmelzaggregat (20) angeschlossen ist, und einem zweiten Eingang (38), an den das zweite Schmelzaggregat (22) angeschlossen ist, wobei die beiden Eingänge (36, 38) mit einem Ausgang (42) der Ventileinheit (24) in Strömungsverbindung stehen und die Strömungsverbindung zwischen dem ersten Eingang (36) und dem Ausgang (40) mittels eines Schließgliedes (50) wahlweise unterbrechbar und freigebbar ist.

2. Vorrichtung nach Anspruch 1, **dadurch gekennzeichnet, dass** in die erste Schmelzkammer (26) eine aufschmelzbare Kleberpatrone einsetzbar ist.

3. Vorrichtung nach Anspruch 1 oder 2, **dadurch gekennzeichnet, dass** das erste Schmelzaggregat (20) einen Vorratsbehälter (32) aufweist, der über eine Zufuhröffnung (30) mit der ersten Schmelzkammer (26) verbunden ist, wobei in den Vorratsbehälter (32) ein aufschmelzbares Klebergranulat einfüllbar ist.

4. Vorrichtung nach einem der voranstehenden Ansprüche, **dadurch gekennzeichnet, dass** die zweite Schmelzkammer über eine beheizbare Verbindungsleitung (40) mit dem zweiten Eingang (38) der Ventileinheit (24) verbunden ist.

5. Vorrichtung nach einem der voranstehenden Ansprüche, **dadurch gekennzeichnet, dass** die Strömungsverbindung zwischen dem ersten Eingang (36) und dem Ausgang (42) der Ventileinheit (24) mittels des Schließglieds (50) wahlweise unterbrechbar und freigebbar ist unter Aufrechterhaltung der Strömungsverbindung zwischen dem zweiten Eingang (48) und dem Ausgang (42).

6. Vorrichtung nach einem der voranstehenden Ansprüche, **dadurch gekennzeichnet, dass** das Schließglied (50) in der Ventileinheit (24) schwenkbar gelagert ist.

7. Vorrichtung nach Anspruch 6, **dadurch gekennzeichnet, dass** das Schließglied als Schwenkbolzen (50) ausgebildet ist, der eine Durchgangsbohrung (52) aufweist und zwischen einer Freigabestellung, in der die Durchgangsbohrung (52) fluchtend zu einem Strömungskanal (48) ausgerichtet ist, und einer Sperrstellung, in der die Durchgangsbohrung (52) quer zum Strömungskanal (48) ausgerichtet ist, hin und her schwenkbar ist.

8. Vorrichtung nach einem der voranstehenden Ansprüche, **dadurch gekennzeichnet, dass** das zweite Schmelzaggregat (22) an einem Gestell (48) der Vorrichtung (10) verschiebbar gelagert ist.

9. Vorrichtung nach einem der voranstehenden Ansprüche, **dadurch gekennzeichnet, dass** das zweite Schmelzaggregat (22) auf Teleskopschienen (54, 56) gelagert ist.

10. Vorrichtung nach einem der voranstehenden Ansprüche, **dadurch gekennzeichnet, dass** die Ventileinheit (24) mit der ersten Schmelzkammer (26) wärmeleitend verbunden ist.

11. Vorrichtung nach einem der voranstehenden Ansprüche, **dadurch gekennzeichnet, dass** die Ventileinheit (24) einen Abschluss der ersten Schmelzkammer (26) ausbildet.
